# EUROPÄISCHE PATENTSCHRIFT

(11) **EP 2 127 969 B1**
(45) Veröffentlichungstag und Bekanntmachung des Hinweises auf die Patenterteilung: **20.02.2019**
(21) Anmeldenummer: 09100201.4
(22) Anmeldetag: 26.03.2009
(51) Int. Cl.: B60S 1/38

(54) **Wischblatt**
Wiper blade
Raclette d'essuie-glace

(30) Priorität: 26.05.2008 DE 102008001956
(43) Veröffentlichungstag der Anmeldung: 02.12.2009
(73) Patentinhaber: ROBERT BOSCH GMBH, 70442 Stuttgart (DE)
(72) Erfinder: Op't Roodt, Inigo, 3500, Hasselt (BE); Wilms, Christian, 3582, Koersel-Beringen (BE); De Block, Peter, 3545, Halen (BE); Jans, Geert, 3630, Maasmechelen (BE); Verburgh, Yves, 2870, Puurs (BE); Beelen, Hans, 3540, Herk de Stad (BE); Fatan, Bart, 3510, Kermt (BE); Ghys, Frank, 3360, Bierbeek (BE); Windmolders, Eric, 3510, Kermt (BE)

(56) Entgegenhaltungen:
- EP-A1- 1 491 416
- EP-A1- 2 103 490
- WO-A1-2005/108178
- DE-A1-102006 020 524

## Beschreibung

### Stand der Technik

Die Erfindung geht von einem Wischblatt nach dem Oberbegriff des Anspruchs 1 aus.

Aus der DE 10 2005 062 462 A1 ist ein Wischblatt mit einem Träger aus Kunststoff bekannt, der zu einer Wischleiste hin zwei einander zugewandte, in Längsrichtung des Wischblatts verlaufende Halteschienen aufweist. Diese bilden einen im Querschnitt annähernd rechteckigen Zwischenraum mit einem Längsspalt und dienen zur Aufnahme einer Rückenleiste der Wischleiste. An dem Träger sind ein Spoiler aus Kunststoff und mindestens eine Federschiene vorgesehen. Diese ist in einem Längskanal des Trägers bzw. des Spoilers angeordnet. Der Träger, der aus einem härteren Werkstoff als der Spoiler hergestellt ist, ist mit diesem über eine Halteschiene formschlüssig verbunden oder wird in einem Mehrstoffextrusionsverfahren mit dem Träger einstückig in einem Arbeitsgang hergestellt. Der Träger steht zusammen mit der Federleiste ein Stück weit über das Ende des Spoilerprofils vor. Der Träger besitzt in Höhe des Längskanals seitliche Stützleisten mit seitlichen Aussparungen, in die Rastnasen von Endkappen einrasten. Die Endkappen sind auf den Stützleisten geführt.

Aus der US 7 210 189 B2 ist ein Wischblatt bekannt, bei dem an einem Spoiler eine Halteschiene für eine Wischleiste angeformt ist. Oberhalb der Halteschiene befindet sich ein zentraler Längskanal zur Aufnahme einer Federschiene, die an ihren Enden ein Stück weit über das Spoilerprofil vorsteht. In dem vorstehenden Ende befinden sich Stanzlöcher zum Fixieren von Endkappen.
Ferner ist aus der DE 10 2006 020 524 A1 ein Wischblatt bekannt, das in einer Kopfleiste seiner Wischleiste einen Längskanal für eine Federschiene aufweist. Die Kopfleiste und die Federschiene werden seitlich und von unten von Halteschienen des Spoilers umfasst. An den Enden des Wischblatts sind Endkappen aufgesetzt. Von diesen kann mindestens eine entfallen, wenn sie durch ein am Spoiler angeformtes Endstück ersetzt wird.
Aus der EP 1 491 416 A1 ist ein Wischplatt bekannt, das eine Wischleiste, ein Spoilerprofil und eine Federschiene aufweist. Das Wischblatt ist durch eine Endkappe abgeschlossen und die Wischleiste reicht über das Spoilerprofil in Richtung der Endkappe hinaus.

### Offenbarung der Erfindung

Nach der Erfindung umfasst die Halteschiene der Endkappe den Längskanal auch von unten. Ferner greift ein in Montagerichtung gerichtetes Rastelement der Endkappe in den Längskanal ein und verrastet mit einem Gegenstück, das an dem Ende der Federschiene angeformt ist. Dies kann dadurch ermöglicht werden, dass in einem relativ starren Längskanal genügend Spielraum vorgesehen ist, damit das Rastelement bzw. das Gegenstück beim Verrasten elastisch seitlich nachgeben kann, oder indem der Längskanal zumindest an seinen Enden elastisch nachgiebig ist, indem er z.B. in einer Kopfleiste einer Wischleiste angeordnet ist. Die Halteschiene der Endkappe weist in ihren Seitenwänden Fenster auf. Der Längskanal kann somit im Bereich der Fenster seitlich ausweichen, wodurch beim Verrasten eine größere Nachgiebigkeit erzielt wird.
Nach einer Ausgestaltung der Erfindung ist das Rastelement an einer nach außen weisenden Stirnwand innen angeformt und umfasst mit seinen Klauen das Gegenstück zangenartig. Das Gegenstück ist dabei am Ende der Federschiene als flacher pilzförmiger Zapfen angeformt. Nach dem Verrasten liegen Hinterschneidungen der Klauen an Hinterschneidungen des Zapfens an. Die Breite des Zapfens ist auf den Zwischenraum zwischen den Klauen abgestimmt, sodass beim Verrasten einerseits die Elastizität der Klauen nicht überschritten wird und andererseits ein ausreichend fester Halt der Kappe gesichert ist.
Zur leichteren Montage der Endkappe besitzen die Klauen in Montagerichtung dachförmige, seitliche Schrägen, während an dem Zapfen entgegengesetzt geneigte Schrägen vorgesehen sind. Nach einer weiteren Ausgestaltung der Erfindung ist als Rastelement der Endkappe ein keilförmiger Zapfen vorgesehen, der an seiner breitesten Stelle mindestens eine seitliche Stufe besitzt, die von mindestens einer Klaue der Federschiene hintergriffen wird. Durch die Vertauschung von Rastelement und Gegenstück gegenüber der zuvor erwähnten Ausführung ergibt sich in vorteilhafter Weise, dass der Zapfen, der als Teil der Endkappe aus Kunststoff gefertigt ist, weniger störanfällig ist, als die zangenartigen Klauen, die nunmehr Bestandteil der Federschiene sind. Ferner besteht die Möglichkeit, durch die Fenster in den Seitenwänden der Halteschiene der Endkappe die Klauen an den Federschienen über ihre Elastizität hinaus plastisch nach innen zu biegen, sodass sich eine festere Rastverbindung ergibt. Dadurch ist es auch möglich, dass die größte Breite des Zapfens geringfügig kleiner ist, als der Zwischenraum zwischen den Klauen der Federschiene.

Der Zapfen kann bei einer anderen Ausführung einen Spalt besitzen, der in einer mittleren, durch eine Wischlippe verlaufenden Längsebene angeordnet ist. Dadurch erreicht man eine größere elastische Nachgiebigkeit der Zapfenteile. Ferner kann der Zapfen nur an einer Seite eine Stufe aufweisen. Eine solche Ausführung ist besonders für schmale Wischleisten vorteilhaft, die einen entsprechend schmalen Längskanal haben.

Der Zapfen ist zweckmäßigerweise an der Stirnwand der Endkappe angeformt, die nach außen weist. Eine andere Möglichkeit besteht jedoch auch darin, dass die Halteschiene der Endkappe im Bereich ihrer nach außen weisenden Stirnseite eine ringförmige Spange besitzt, in die das abgeschrägte Ende der Klauen der Federschiene eingreift, sodass die Klauen im Betrieb nicht nach außen nachgeben können. Die Spange kann stirnseitig offen oder durch eine Stirnwand der Endkappe geschlossen sein. In jedem Fall kann der Zapfen entweder an der Stirnwand oder an der Spange angeformt sein.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht eines erfindungsgemäßen Wischblatts in einer Teilexplosionsdarstellung,
- Fig. 2: ein Ende eines Wischblatts nach Fig. 1 in einem vergrößerten Maßstab,
- Fig. 3: eine perspektivische Ansicht einer Endkappe von einem Ende aus,
- Fig. 4: eine perspektivische Ansicht der Endkappe nach Fig. 3 entgegen der Montagerichtung,
- Fig. 5: eine perspektivische Ansicht einer montierten Endkappe
- Fig. 6: einen Querschnitt entsprechend der Linie VI-VI in Fig. 5,
- Fig. 7: einen Längsschnitt entsprechend der Linie VII-VII in Fig. 5,
- Fig. 8: eine Variante einer Federschiene zu Fig. 7,
- Fig. 9: eine Variante einer Endkappe zu Fig. 3 und Fig. 4,
- Fig. 10: eine Variante zu dem Längsschnitt nach Fig. 7 entsprechend der Endkappe nach Fig. 9,
- Fig. 11: eine Variante zu Fig. 10,
- Fig. 12: eine Variante einer Endkappe zu Fig. 9,
- Fig. 13: eine Variante zu dem Längsschnitt nach Fig. 10 entsprechend der Endkappe nach Fig. 12,
- Fig. 14: eine weitere Variante einer Endkappe zu Fig. 9,
- Fig. 15: eine weitere Variante zu dem Längsschnitt nach Fig. 10 entsprechend der Endkappe nach Fig. 14,
- Fig. 16: eine weitere Variante einer Endkappe zu Fig. 9 und
- Fig. 17: eine weitere Variante zu dem Längsschnitt nach Fig. 10 entsprechend der Endkappe nach Fig. 16.

### Ausführungsformen der Erfindung

Ein Wischblatt 10 ist aus einer Wischleiste 16, zwei Spoilerteilen 14, zwei Endkappen 34 und einer Federschiene 28 aufgebaut. Im mittleren Bereich des Wischblatts 10 ist ein Anschlusselement 12 befestigt, um das Wischblatt 10 gelenkig mit einem nicht dargestellten Wischarm zu verbinden.

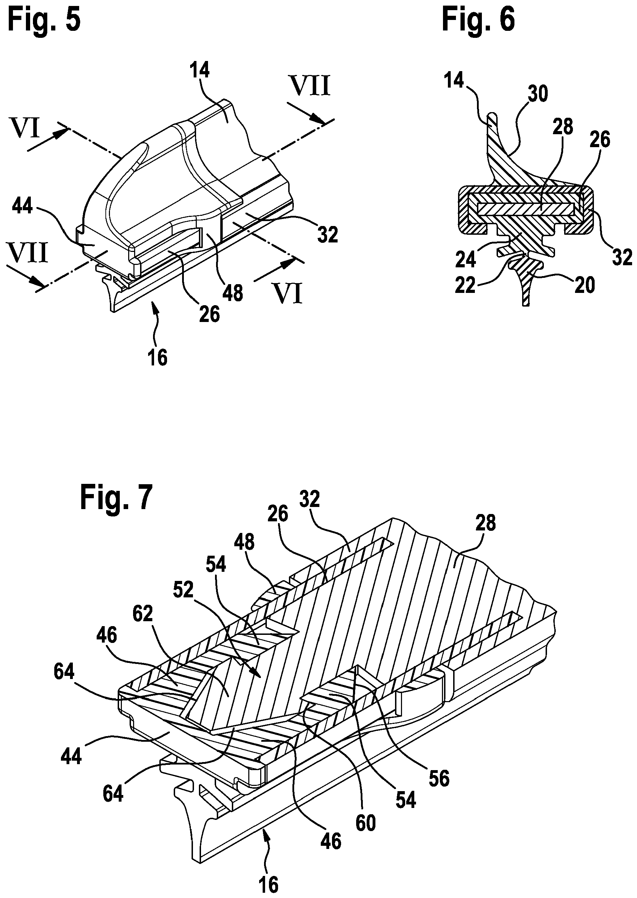

Die Wischleiste 16 besitzt eine Wischlippe 20 (Fig. 6), die über einen Kippsteg 22 mit einer Kopfleiste 24 verbunden ist. An der Kopfleiste 24 ist auf der der Wischlippe 20 abgewandten Längsseite ein Längskanal 26 angeformt, in den die Federschiene 28 eingesetzt ist. Der Längskanal 26 und die Federschiene 28 stehen an ihren Enden 18 ein Stück weit über die Strömungsprofile 30 der Spoilerteile 14 vor. Auf diese vorstehenden Enden 18 werden die Endkappen 34 in Montagerichtung 36 aufgesetzt und mit der Federschiene 28 verrastet. Grundsätzlich reicht es aus, wenn das Wischblatt 10 nur eine Endkappe 34 aufweist, während das andere Ende ein an das Spoilerteil 14 angeformtes Endstück aufweist.

Die Spoilerteile 14 umfassen den Längskanal 26 seitlich und von unten mit einer Halteschiene 32, die aus einem härteren Werkstoff besteht als das übrige Spoilerprofil. Es besteht auch die Möglichkeit, die Wischleiste 16 und die Spoilerteile 14 in einem Mehrstoffextrusionsverfahren herzustellen, wobei in die Spoiler 14 Fenster für das Anschlusselement 12 und die Endkappen 34 ausgeschnitten werden.

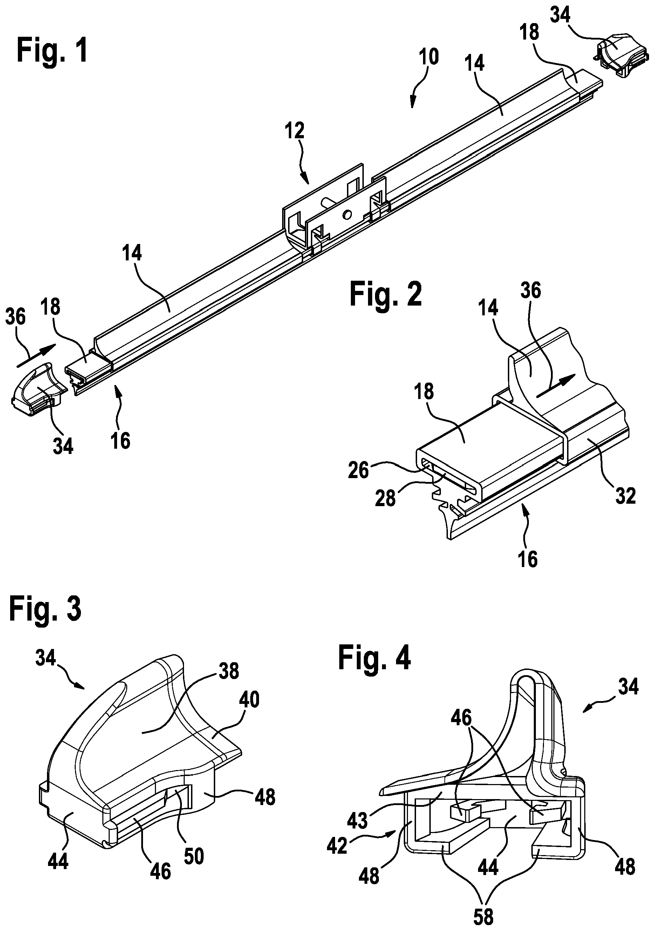

Die Endkappe 34 nach der Ausführung entsprechend Fig. 3 bis Fig. 7 besitzt ein dem Strömungsprofil 30 der Spoilerteile 14 entsprechendes Strömungsprofil 38, das sich über ein Anschlussprofil 40 an die Spoilerteile 14 anschließt. In Verlängerung der Halteschiene 32 des Spoilerteils 14 besitzt die entsprechende Endkappe 34 eine Halteschiene 42 mit einer Deckwand 43, an die sich seitlich Seitenwände 48 anschließen. Etwa parallel zur Deckwand 43 sind nach innen gerichtete Schenkel 58 angeordnet, die den Längskanal 26 auf der der Wischlippe 20 zugewandten Seite umfassen. Eine Stirnwand 44 schließt die Halteschiene 42 an der nach außen weisenden Stirnseite der Endkappe 34 ab. An dieser Stirnseite ist auf der Innenseite ein Rastelement 46 in Form einander gegenüberliegender Klauen 54 angeformt, die einen Zwischenraum für ein an das Ende der Federschiene 28 angeformtes Gegenstück 52 bilden (Fig. 7). Zur Erleichterung der Montage besitzen die Klauen 54 an ihren Stirnseiten Schrägen 56, während das Gegenstück 52 als pilzförmiger Zapfen 62 mit dachförmigen Schrägen 64 ausgebildet und durch ein Stanzverfahren hergestellt ist.

Bei der Montage in Montagerichtung 36 dringen die Klauen 54 mit ihren Schrägen 56 in den Längskanal 26 ein. Dabei werden sie durch die Schrägen 64 des Gegenstücks 52 auseinander gedrückt, bis Hinterschneidungen 60 der Klauen 54 an entsprechende Hinterschneidungen des Zapfens 62 einrasten. Dieser Vorgang wird erleichtert, indem der Längskanal 26 auf Grund seiner Elastizität nachgeben kann und durch Fenster 50 in den Seitenwänden 48 der Halteschiene 42 ausweichen kann. Im montierten Zustand liegen die Seitenwände 48 bündig an der Stirnseite der Halteschiene 32 des Spoilerteils 14 an, während die Stirnseite bündig mit der Stirnseite des Längskanals 26 abschließt. Zweckmäßigerweise sind die Halteschiene 32 des Spoilerteils 14 und die Halteschiene 42 der Endkappe 34 sowie die Stirnwand 44 und das Rastelement 46 aus einem festeren Material als das Strömungsprofil 30 des Spoilerteils 14 und das Strömungsprofil 38 der Endkappe 34.

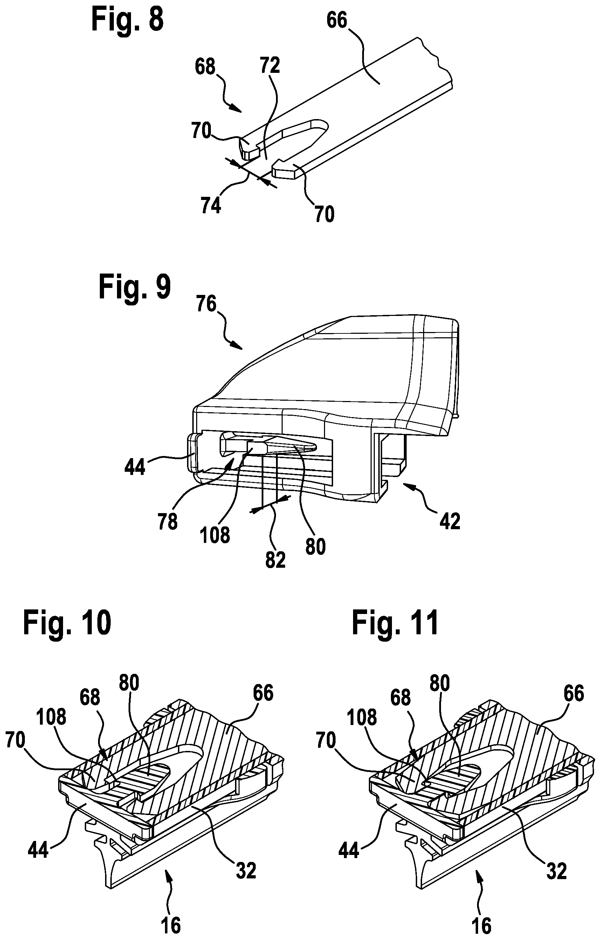

Bei den Ausführungen nach den Fig. 9 bis Fig. 17 ist das Rastelement 78, 94 ein Zapfen 80, 96, 106, während die Gegenstücke 68 an der Federschiene 66 entsprechende Klauen 70 besitzen, die Zapfen 80, 96 und 106 an einer Stufe 108 umfassen.

Der keilförmige Zapfen 80 nach Fig. 9 bis Fig. 13 besitzt in Montagerichtung hinter der breitesten Stelle 82 die Stufe 108. Dabei ist die breiteste Stelle 82 des Zapfens 80 in der Regel geringfügig größer oder gleich der Breite 74 einer Öffnung 72 zwischen den Klauen 70 der Federschiene 66. Es ist jedoch auch möglich, dass die maximale Breite 82 des Zapfens 80 geringfügig kleiner ist als die Breite 74 der Öffnung 72. In diesem Fall ist es besonders zweckmäßig, wenn die Klauen 70 bei der Montage etwas zusammengedrückt werden, was mit geeigneten Werkzeugen durch die seitlichen Fenster 50 in den Halteschienen 42, 86, 92 und 104 der Endkappen 76, 84, 90 und 102 leicht möglich ist. Fig. 10 zeigt den Zustand vor der Verformung der Klauen 70, während Fig. 11 den Zustand nach der Verformung der Klauen 70 darstellt.

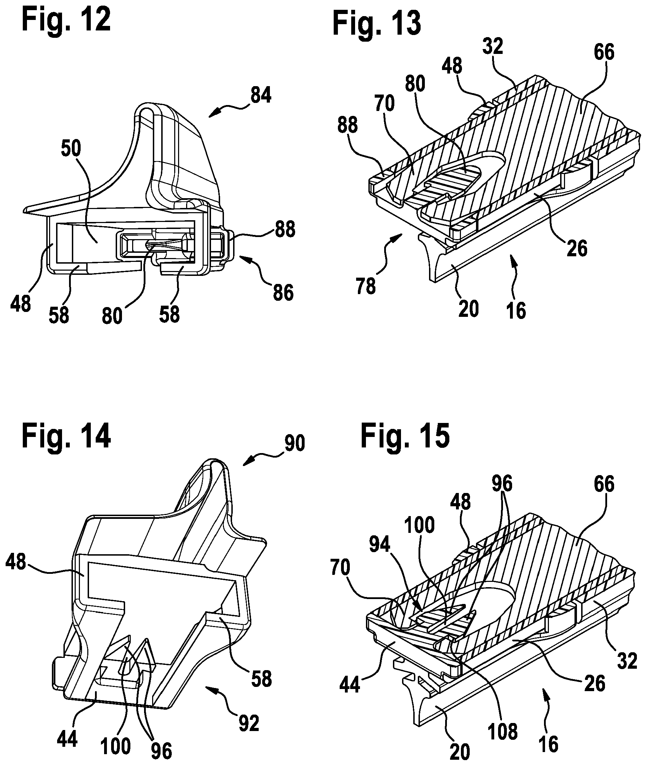

Die Endkappe 84 nach Fig. 12 besitzt anstelle der Stirnwand 44 eine ringförmige Spange 88, in die die abgeschrägten Enden der Klauen 70 eingreifen und gehalten werden. Dabei ist der Zapfen 80 an dem oberen und unteren Bogen der Spange 88 angeformt. Die Spange 88 kann zur Stirnseite, die nach außen weist, offen oder durch eine Stirnwand 44 geschlossen sein.

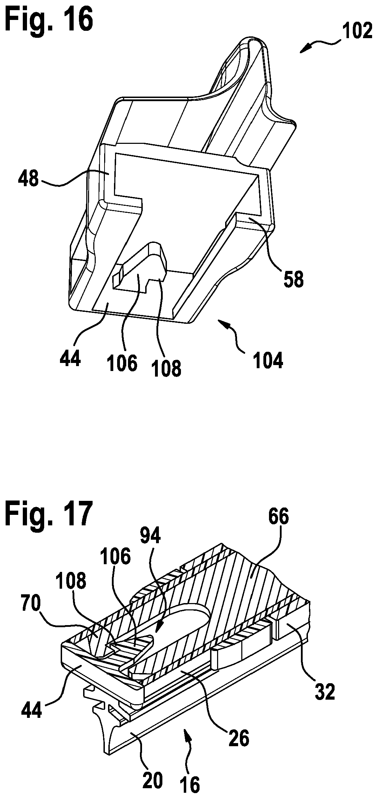

Der Zapfen 96 des Rastelements 94 nach Fig. 14 und Fig. 15 besitzt einen Längsspalt 100, der in einer Längsmittelebenen durch die Wischlippe 20 liegt. Dadurch können die Teile des Zapfens 96 zum Spalt 100 hin bei der Montage nachgeben, was die Montage vereinfacht. Diese Lösung ist besonders geeignet für breitere, größere Wischblätter 10. Bei kleineren, schmaleren Wischblättern 10 ist es vorteilhaft, wenn der Zapfen 106 nur an einer Seite eine Stufe 108 besitzt, die mit einer Klaue 70 der Federschiene 66 verrastet (Fig. 16 und Fig. 17). In diesem Fall kann der Zapfen 106 bei der Montage zu der Seite ausweichen, die der Stufe 108 entgegengesetzt liegt.

## Patentansprüche

1. Wischblatt (10) mit einer Wischleiste (16), einem Spoilerprofil (14) und einer in einem Längskanal (26) angeordneten Federschiene (28, 66), die zusammen mit dem Längskanal (26) mindestens mit einem Ende ein Stück weit über das Spoilerprofil (14) vorsteht und in eine Halteschiene (42, 86, 92, 104) einer Endkappe (34, 76, 84, 90, 102) reicht und von der Halteschiene (42, 86, 92, 104) seitlich umfasst wird, **dadurch gekennzeichnet, dass** die Halteschiene (42, 86, 92, 104) der Endkappe (34, 76, 84, 90, 102) den Längskanal (26) auch von unten umfasst, dass ein in Montagerichtung (36) gerichtetes Rastelement (46, 78, 94) der Endkappe in den Längskanal (26) eingreift und mit einem Gegenstück (52, 68) an dem Ende der Federschiene (28, 66) verrastet, und dass die Halteschiene (42, 86, 92, 104) der Endkappe (34, 76, 84, 90, 102) in ihren Seitenwänden (48) Fenster (50) aufweist.

2. Wischblatt (10) nach Anspruch 1, **dadurch gekennzeichnet, dass** der Längskanal (26) in einer Kopfleiste (24) der Wischleisteleiste (16) angeordnet ist.

3. Wischblatt (10) nach einem der vorhergehenden Ansprüche, **dadurch gekennzeichnet, dass** das Rastelement (46) an einer nach außen weisenden Stirnwand (44) innen angeformt ist und mit seinen Klauen (54) das Gegenstück (52) zangenartig umfasst, das am Ende der Federschiene (28) als flacher, pilzförmiger Zapfen (62) angeformt ist, wobei Hinterschneidungen (60) der Klauen (54) an Hinterschneidungen des Zapfens (62) anliegen.

4. Wischblatt (10) nach Anspruch 3, **dadurch gekennzeichnet, dass** die Klauen (54) in Montagerichtung (36) dachförmige, seitliche Schrägen (56) aufweisen, während an dem Zapfen (62) entgegengesetzt geneigte Schrägen (64) vorgesehen sind.

5. Wischblatt (10) nach einem der Ansprüche 1 bis 2, **dadurch gekennzeichnet, dass** das Rastelement (78) ein keilförmiger Zapfen (80, 96, 106) ist, der an seiner breitesten Stelle (82) mindestens eine seitliche Stufe (108) besitzt, die von mindestens einer Klaue (70) der Federschiene (66) hintergriffen wird.

6. Wischblatt (10) nach Anspruch 5, **dadurch gekennzeichnet, dass** der Zapfen (96) einen Spalt (100) besitzt, der in einer mittleren durch eine Wischlippe (20) verlaufenden Längsebene angeordnet ist.

7. Wischblatt (10) nach einem der Ansprüche 5 oder 6, **dadurch gekennzeichnet, dass** der Zapfen (80, 96, 106) an der Stirnwand (44) der Endkappe (34, 76, 84, 90, 102) angeformt ist, die nach außen weist.

8. Wischblatt (10) nach einem der Ansprüche 5 oder 6, **dadurch gekennzeichnet, dass** die Halteschiene (42, 86, 92, 104) im Bereich ihrer nach außen weisenden Stirnseite eine ringförmige Spange (88) besitzt.

9. Wischblatt (10) nach Anspruch 8, **dadurch gekennzeichnet, dass** an der Spange (88) Zapfen (80, 96, 106) angeformt sind.

## Claims

1. Wiper blade (10) having a wiper strip (16), a spoiler profile (14), and a spring bar (28, 66) which is arranged in a longitudinal channel (26), projects, together with the longitudinal channel (26), at least with one end a certain way beyond the spoiler profile (14), reaches into a retaining bar (42, 86, 92, 104) of an end cap (34, 76, 84, 90, 102), and is surrounded laterally by the retaining bar (42, 86, 92, 104), **characterized in that** the retaining bar (42, 86, 92, 104) of the end cap (34, 76, 84, 90, 102) also surrounds the longitudinal channel (26) from below, **in that** a latching element (46, 78, 94) of the end cap, which latching element (46, 78, 94) is directed in the assembly direction (36), engages into the longitudinal channel (26) and latches with a counterpiece (52, 68) at the end of the spring bar (28, 66), and **in that** the retaining bar (42, 86, 92, 104) of the end cap (34, 76, 84, 90, 102) has windows (50) in its side walls (48).

2. Wiper blade (10) according to Claim 1, **characterized in that** the longitudinal channel (26) is arranged in a top strip (24) of the wiper strip (16).

3. Wiper blade (10) according to either of the preceding claims, **characterized in that** the latching element (46) is formed on the inside on an outwardly pointing end wall (44) and surrounds the counterpiece (52) with its claws (54) in a tongs-like manner, which counterpiece (52) is formed at the end of the spring bar (28) as a flat, mushroom-shaped pin (62), undercuts (60) of the claws (54) bearing against undercuts of the pin (62) .

4. Wiper blade (10) according to Claim 3, **characterized in that** the claws (54) have lateral bevels (56) which are roof-shaped in the assembly direction (36), whereas bevels (64) which are inclined in the opposite direction are provided on the pin (62).

5. Wiper blade (10) according to either of Claims 1 and 2, **characterized in that** the latching element (78) is a wedge-shaped pin (80, 96, 106) which has at least one lateral step (108) at its widest point (82), which lateral step (108) is engaged behind by at least one claw (70) of the spring bar (66).

6. Wiper blade (10) according to Claim 5, **characterized in that** the pin (96) has a gap (100) which is arranged in a central longitudinal plane which runs through a wiper lip (20).

7. Wiper blade (10) according to either of Claims 5 and 6, **characterized in that** the pin (80, 96, 106) is formed on that end wall (44) of the end cap (34, 76, 84, 90, 102) which points towards the outside.

8. Wiper blade (10) according to either of Claims 5 and 6, **characterized in that** the retaining bar (42, 86, 92, 104) has an annular clip (88) in the region of its outwardly pointing end side.

9. Wiper blade (10) according to Claim 8, **characterized in that** pins (80, 96, 106) are formed on the clip (88).

## Revendications

1. Raclette d'essuie-glace (10) avec un balai d'essuie-glace (16), un profilé déflecteur (14) et un rail élastique (28, 66) disposé dans un canal longitudinal (26), qui avec le canal longitudinal (26) dépasse au moins avec une extrémité quelque peu au-delà du profilé déflecteur (14) et qui arrive dans un rail de maintien (42, 86, 92, 104) d'un capuchon d'extrémité (34, 76, 84, 90, 102) et est entouré latéralement par le rail de maintien (42, 86, 92, 104), **caractérisée en ce que** le rail de maintien (42, 86, 92, 104) du capuchon d'extrémité (34, 76, 84, 90, 102) entoure aussi par le bas le canal longitudinal (26), **en ce qu'**un élément d'encliquetage (46, 78, 94) du capuchon d'extrémité orienté dans la direction de montage (36) s'engage dans le canal longitudinal (26) et se verrouille avec une pièce opposée (52, 68) à l'extrémité du rail élastique (28, 66), et **en ce que** le rail de maintien (42, 86, 92, 104) du capuchon d'extrémité (34, 76, 84, 90, 102) présente des fenêtres (50) dans ses parois latérales (48) .

2. Raclette d'essuie-glace (10) selon la revendication 1, **caractérisée en ce que** le canal longitudinal (26) est disposé dans une barrette de tête (24) du balai d'essuie-glace (16).

3. Raclette d'essuie-glace (10) selon l'une quelconque des revendications précédentes, **caractérisée en ce que** l'élément d'encliquetage (46) est formé intérieurement sur une paroi frontale (44) tournée vers l'extérieur et enserre avec ses griffes (54) à la manière d'une pince la pièce opposée (52), qui est formée à l'extrémité du rail élastique (28) sous la forme d'une cheville plate en forme de champignon (62), dans laquelle des contre-dépouilles (60) des griffes (54) s'appliquent sur des contre-dépouilles de la cheville (62).

4. Raclette d'essuie-glace (10) selon la revendication 3, **caractérisée en ce que** les griffes (54) présentent des rampes latérales (56) en forme de toit dans la direction de montage (36), tandis qu'il est prévu des rampes inclinées (64) de façon opposée sur la cheville (62).

5. Raclette d'essuie-glace (10) selon l'une quelconque des revendications 1 à 2, **caractérisés en ce que** l'élément d'encliquetage (78) est une cheville en forme de coin (80, 96, 106), qui présente à son endroit le plus large (82) au moins un gradin latéral (108), qui est accroché par au moins une griffe (70) du rail élastique (66) .

6. Raclette d'essuie-glace (10) selon la revendication 5, **caractérisée en ce que** la cheville (96) comporte une fente (100), qui est disposée dans un plan longitudinal central qui s'étend à travers une lèvre d'essuie-glace (20) .

7. Raclette d'essuie-glace (10) selon une des revendications 5 ou 6, **caractérisée en ce que** la cheville (80, 96, 106) est formée sur la paroi frontale (44) du capuchon d'extrémité (34, 76, 84, 90, 102), qui est tournée vers l'extérieur.

8. Raclette d'essuie-glace (10) selon une des revendications 5 ou 6, **caractérisée en ce que** le rail de maintien (42, 86, 92, 104) comporte une attache annulaire (88) dans la région de son côté frontal tourné vers l'extérieur.

9. Raclette d'essuie-glace (10) selon la revendication 8, **caractérisée en ce que** des chevilles (80, 96, 106) sont formées sur l'attache (88).
